# EUROPEAN PATENT APPLICATION

(11) **EP 3 718 807 A1**
(43) Date of publication of application: **07.10.2020**
(21) Application number: 19425022.1
(22) Date of filing: 03.04.2019
(51) Int. Cl.: B60K 15/04, B60K 15/077

(54) **INLET ASSEMBLY FOR FUEL TANKS OF VEHICLES**

(71) Applicant: F.A.R.M.A. S.r.l. Fabbrica Accessori Ricambi Moto e Auto, 40059 Frazione Fossatone-Medicinia (BO) (IT)
(72) Inventor: Gozzi, Riccardo, 44011 Argenta FE (IT)
(74) Representative: Modiano, Micaela Nadia

(57) **Abstract**

An inlet assembly for fuel tanks of vehicles, which comprises a substantially tubular sleeve (2), which can be stably arranged along a communication route between the fuel tank of a vehicle and the outside environment, and a ring (4), arranged in a mating configuration substantially coaxial with the inner surface of the sleeve (2) by the action of respective retention elements; such elements comprise at least one ridge (6) which protrudes from at least one respective end rim (7) of the ring (4) and is kept substantially resting on a respective ledge (8), which in turn protrudes from the inner surface of the sleeve (2) and is arranged so as to interfere with the longitudinal translation of the ridge (6) and of the ring (4), within the sleeve (2); the rim (7) is capable of elastically oscillating from a non-deformed position, in which it is maintained when the ring (4) is in the mating configuration, to at least one deformed position, in which the ridge (6) is bent inward so that the ledge (8) allows the longitudinal translation of the ridge (6), and of the ring (4), with respect to the sleeve (2), in order to allow the preliminary introduction of the ring (4) into the sleeve (2) and the obtaining of the mating configuration.

## Description

The present invention relates to an inlet assembly for fuel tanks of vehicles.

As is known, in motor vehicles access to the fuel tank for refueling typically takes place at an inlet assembly, usually called a "filler neck", which is located in an opening provided along a side of the vehicle.

In an implementation that is now well established, the filler neck has a substantially axially symmetric shape structure and receives a fuel cap at one end, while at the opposite end it has to offer a passage section with a smaller diameter, so as to only allow the refueling nozzle to be inserted.

In order to obtain such results the filler neck comprises first of all a first cylindrical sleeve, which is configured for coupling to the fuel cap; at the other end of the first sleeve, a second cylindrical sleeve, of smaller diameter, protrudes coaxially outward, and is designed to receive the refueling nozzle. The second sleeve is further coupled to a filter, which intercepts any foreign bodies carried in the fuel, preventing them from reaching the fuel tank.

It must be pointed out however that owing to production constraints, the sleeve is typically obtained by molding, and the geometry defined above, complicated by other elements of construction, defines one or more undercuts, which raises problems that are not easy to solve.

In more detail, in order to allow the components of the mold to provide the various inner surfaces and the various elements of the filler neck, it is necessary to have various passage openings along the connecting transverse wall between the two sleeves.

Under normal refueling conditions, the nozzle is inserted up to the inside of the second sleeve, beyond the transverse wall: from there, the fuel reaches the tank only by passing through the filter, and therefore the presence of the openings does not create problems.

In particular cases however, refueling is carried out with a fuel can: the fuel is made to fall into the filler neck from outside, by pouring it into the first sleeve. In this case, at least some of the fuel can reach the fuel tank through the passage openings, bypassing the filter, and this allows dirt and other impurities carried by the fuel to be introduced into the tank (and from there, also into the engine), with evidently unwelcome effects.

The aim of the present invention is to solve the above mentioned problems, by providing an inlet assembly for fuel tanks of vehicles that can be easily obtained by molding.

Within this aim, an object of the invention is to provide an inlet assembly that combines simplicity of production and complete filtering of the fuel that passes through it, with any refueling method.

Another object of the invention is to provide an inlet assembly that ensures adequate structural strength and reliability of operation.

Another object of the invention is to provide an inlet assembly that ensures practical methods for coupling to further additional components.

Another object of the invention is to provide an inlet assembly for fuel tanks of vehicles that adopts an alternative technical and structural architecture to those of conventional assemblies.

Another object of the invention is to provide an inlet assembly that can be easily implemented using elements and materials that are readily available on the market.

Another object of the invention is to provide an inlet assembly that is low cost and safely applied.

This aim and these and other objects which will become better apparent hereinafter are achieved by an inlet assembly according to claim 1.

Further characteristics and advantages of the invention will become better apparent from the description of a preferred, but not exclusive, embodiment of the inlet assembly according to the invention, which is illustrated by way of non-limiting example in the accompanying drawings wherein:

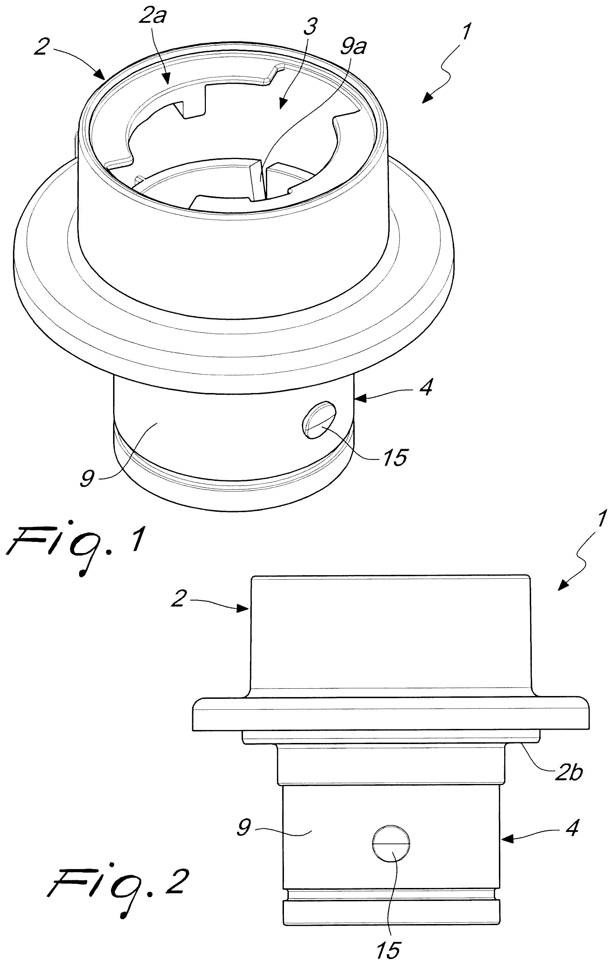

Figure 1 is a perspective view of the inlet assembly according to the invention;
Figure 2 is a front elevation view of the assembly in Figure 1;

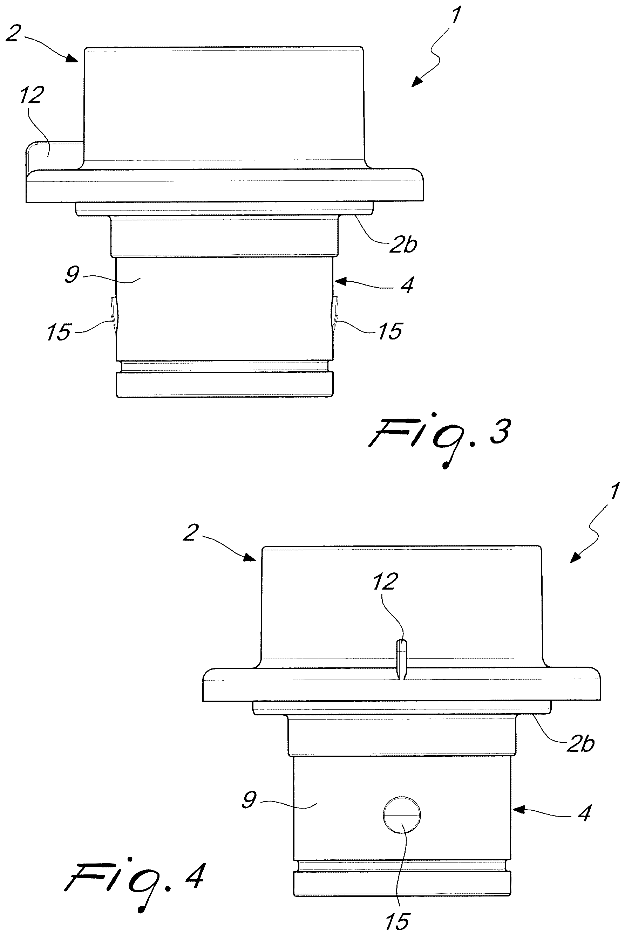

Figure 3 is a side view of the assembly in Figure 1;
Figure 4 is a view from behind of the assembly in Figure 1;
Figure 5 is a view from above of the assembly in Figure 1;
Figure 6 is a cross-sectional view of Figure 5, taken along the line VI-VI;
Figure 7 is a greatly enlarged detail of Figure 6;
Figure 8 is a perspective view of the sleeve of the assembly in Figure 1;
Figure 9 is a side view of the sleeve in Figure 8;
Figure 10 is a view from behind of the sleeve in Figure 8;
Figure 11 is a view from above of the sleeve in Figure 8;
Figure 12 is a cross-sectional view of Figure 11, taken along the line XIII-XIII;
Figure 13 is a view from below of the sleeve in Figure 8;
Figure 14 is a perspective view of the ring of the assembly in Figure 1;
Figure 15 is a front elevation view of the ring in Figure 14;
Figure 16 is a side view of the ring in Figure 14;
Figure 17 is a view from behind of the ring in Figure 14;
Figure 18 is a view from above of the ring in Figure 14;
Figure 19 is a view from below of the ring in Figure 14.

With reference to the figures, the reference numeral 1 generally designates an inlet assembly for fuel tanks of vehicles. In more detail, it should be noted that the assembly 1 is designed to be used preferably on fuel tanks that contain liquid, of the type of fuel and/or additives, in motor vehicles of various types, and in more detail in trucks, semi-trailer trucks, lorries and the like.

Thus reference shall be made in the present discussion to such application, in which effectively the assembly 1 performs the role of a filler neck, but the possibility is not ruled out of adopting the assembly 1 according to the invention for different fuel tanks and/or other vehicles, according to specific requirements, while remaining within the scope of protection claimed herein.

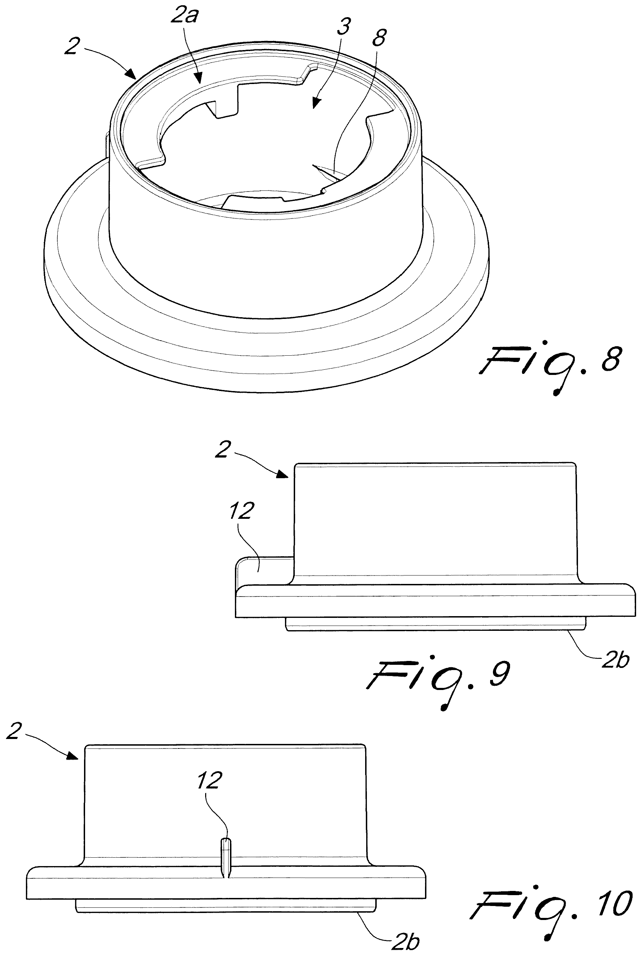

The assembly 1 comprises a substantially tubular sleeve 2, which in a possible (non-exclusive) embodiment is the specific subject matter of the accompanying Figures 8-13.

The sleeve 2 can be stably arranged along a communication route between the tank and the outside environment; typically such communication route is the one used for the replenishment of fuel, with the sleeve 2 being kept facing outward, at an opening provided along a side of the vehicle and with the dispenser nozzle being inserted into the passage 3 defined inside the sleeve 2 (according to methods that are well known).

Moreover, right at the final outward-directed portion, typically the sleeve 2 is designed to receive a fuel cap (partially accommodated in the passage 3) and to this end it is typically provided with detachable anchoring means 2a, which are designed to cooperate with the fuel cap (and which in any case are also conventional).

In any case it is possible to locate the sleeve 2 along other communication routes, while remaining within the scope of protection claimed herein.

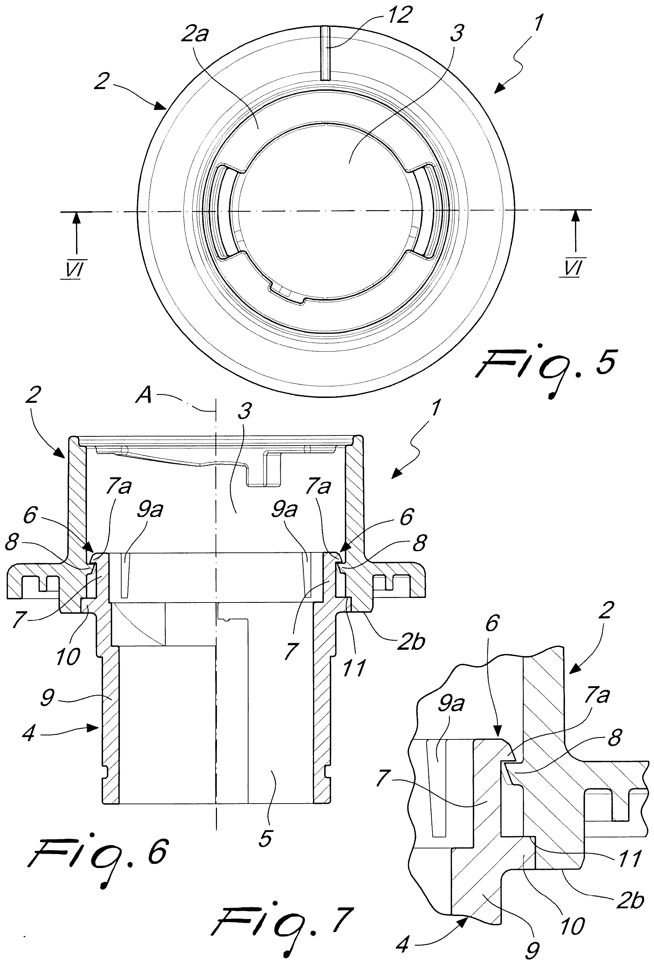

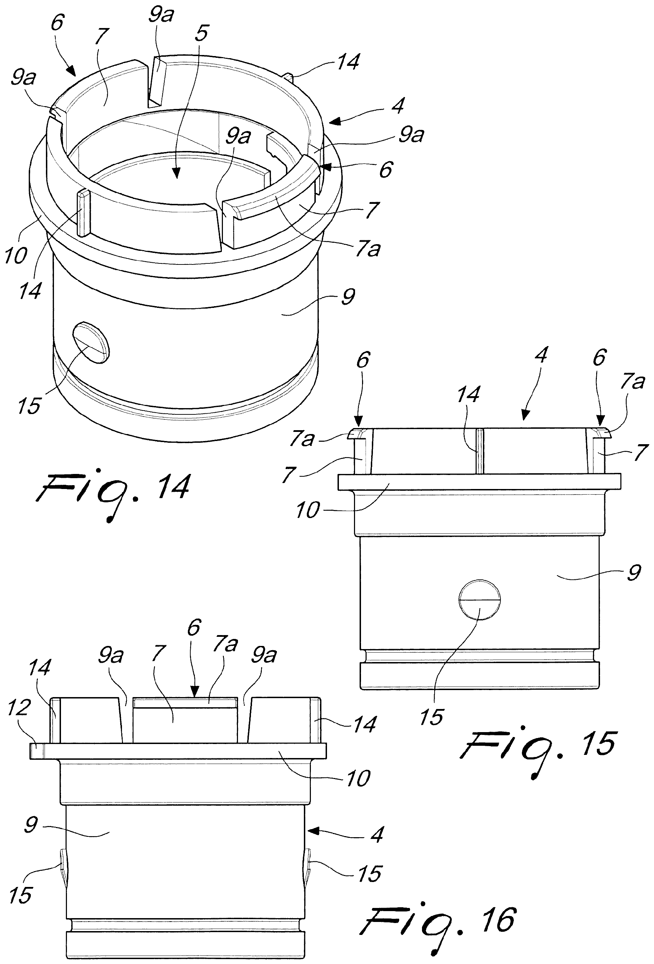

According to the invention, the assembly 1 comprises a ring 4 (Figures 14-19), which (after assembly and therefore under conditions of use) is arranged in a mating configuration substantially coaxial with the inner surface of the sleeve 2 (Figure 6) by the action of respective retention elements (which prevent the extraction of the ring 4 from the sleeve 2).

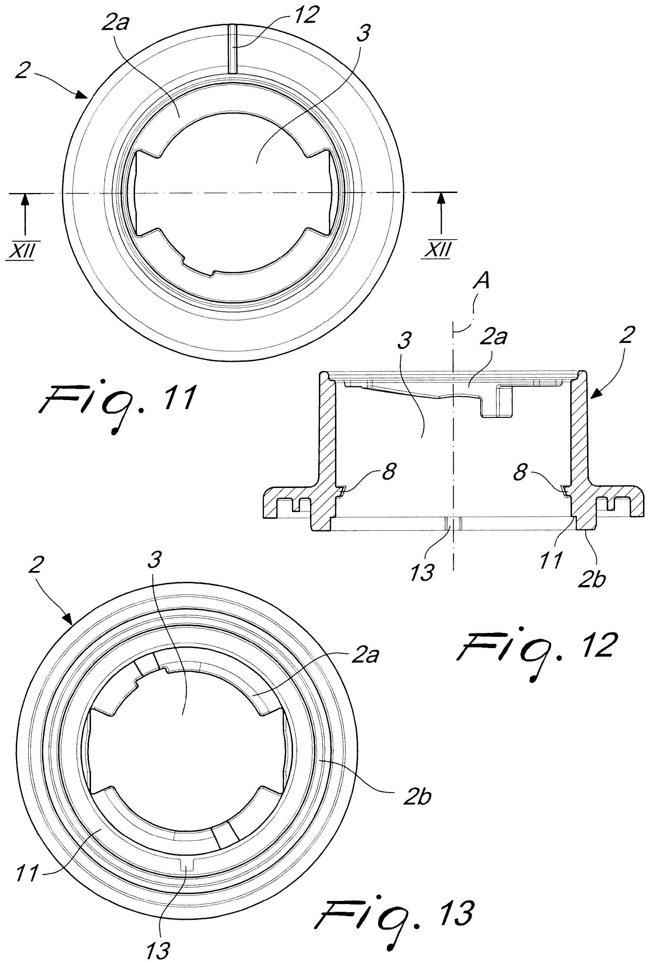

In other words, in the mating configuration the ring 4 is substantially arranged along the longitudinal axis A of the sleeve 2 (indicated for the sake of simplicity only in Figures 6 and 12) and therefore along the passage 3, but defining a reduction in cross-section with respect to the latter (the ring 4 is partially inserted into the passage 3 and into the sleeve 2, and the channel 5 defined inside it obviously has a smaller diameter than that of the passage 3).

The elements comprise at least one ridge 6 which protrudes from at least one respective end rim 7 of the ring 4; the ridge 6 is kept substantially resting on a respective ledge 8 (it abuts against it). In turn, the ledge 8 protrudes from the inner surface of the sleeve 2 and is arranged so as to interfere with the longitudinal translation of the ridge 6 and of the ring 4, within the sleeve 2 (it is normally arranged so as to oppose the introduction of the ring 4 into the passage 3 and/or its subsequently extraction).

The rim 7 can oscillate elastically from a non-deformed position, in which it is maintained when the ring 4 is in the mating configuration (Figures 6-7), to at least one deformed position, in which the ridge 6 is bent inward (toward the axis A and the passage 3). In the deformed position it is thus possible to make the ledge 8 allow the longitudinal translation of the ridge 6, and of all the ring 4, with respect to the sleeve 2. This evidently allows (during the step of putting together the assembly 1) the preliminary introduction of the ring 4 into the sleeve 2 and the obtaining of the mating configuration (which is then maintained during use of the assembly 1).

It should be emphasized that the assembly 1 described up to this point achieves the main aims of the invention from this point onward: the role performed by conventional filling necks, through which refueling is carried out and which offer a variation in the cross-section of the fuel path, is performed by the assembly 1, which is made of two components (the sleeve 2 and the ring 4). Both the sleeve 2 and the ring 4, kept in a stable mating configuration by the retention elements, have a simplified geometry and structure, and can be provided without any difficulty in the molding phase.

At the same time, by observing the assembly 1 overall it can be seen that the fuel is necessarily forced to reach the tank first through the passage 3 and then through the channel 5, since there are no other alternative routes.

This is in fact due to the peculiar choice to provide the assembly 1 in two components, and to the consequent elimination of any undercut or structural complication that, in conventional solutions, makes it necessary to have transverse openings through which the fuel can flow bypassing the designated path (especially when the fuel is poured using a fuel can and not dispensed from a nozzle).

In particular, the retention elements comprise at least two ridges 6, which protrude from respective end rims 7 of the ring 4. In this regard, it should be noted that the accompanying figures show a possible embodiment, in which the ring 4 has two end rims 7 which are provided with respective ridges 6, which are diametrically mutually opposite to the longitudinal axis A. It should be noted that such choice is only an illustrative and non-limiting possible implementation of the invention. In fact, it is possible to provide assemblies 1 in which the ridges 6 are arranged differently and/or in any number, according to the specific requirements and while remaining within the scope of protection claimed herein.

In the preferred embodiment, which is illustrated by way of example in the accompanying figures but which does not limit the application of the invention, the ring 4 comprises a substantially cylindrical main body 9; the end rim 7 (or each end rim 7) is delimited by two longitudinal slots 9a which are provided along an edge of the body 9 (the edge that is intended to be introduced into the sleeve 2).

It should be noted in any case that the end rim 7 can also be provided differently (even without using slots 9a).

With further reference to the preferred embodiment, shown purely for the purpose of example in the accompanying figures (Figures 7, 14, 15, 17 for example), the ridge 6 (or each ridge 6) is constituted by a tooth 7a which is formed by the tip of the respective rim 7. The outer wall of the tooth 7a (see for example Figure 7) is inclined and progressively tapered toward the edge of the body 9, in order to facilitate the elastic deformation of the respective rim 7 during the preliminary introduction of the ring 4 into the sleeve 2 and the obtaining of the mating configuration. However, as can be seen from Figure 7 for example, the inner wall of the tooth 7a is kept parallel to the axis A of the passage 3 and of the channel 5.

Conveniently, the ring 4 has a collar 10 which protrudes outward (substantially like a flange). As can be seen in particular in Figures 6-7, in the mating configuration the collar 10 rests against a shoulder 11 which is defined by the sleeve 2 (preferably proximate to a rim 2b thereof). Resting the collar 10 on the shoulder 11 makes it possible to block the further advancement of the ring 4 in the sleeve 2. Therefore, in the mating configuration, resting the ridge 6 on the ledge 8 prevents the extraction of the ring 4, while the further introduction of the latter is prevented by the collar 10 which rests on (abuts against) the shoulder 11 (visible for example also in Figures 12-13). It should likewise be noted that the abutment of the collar 10 against the shoulder 11 "closes" any other passage routes of the fuel, outside of the channel 5.

However, the possibility is not ruled out of achieving the obstruction of the advancement and/or of the penetration of the fuel in another way.

Advantageously, the sleeve 2 and the ring 4 have respective external optical reference elements 12, which are arranged aligned in the mating configuration. The elements 12 make it possible to easily identify the correct arrangement of the ring 4 with respect to the sleeve 2 (so that the ridges 6 and the ledges 8 can interact in the desired manner) in the step of obtaining the mating configuration.

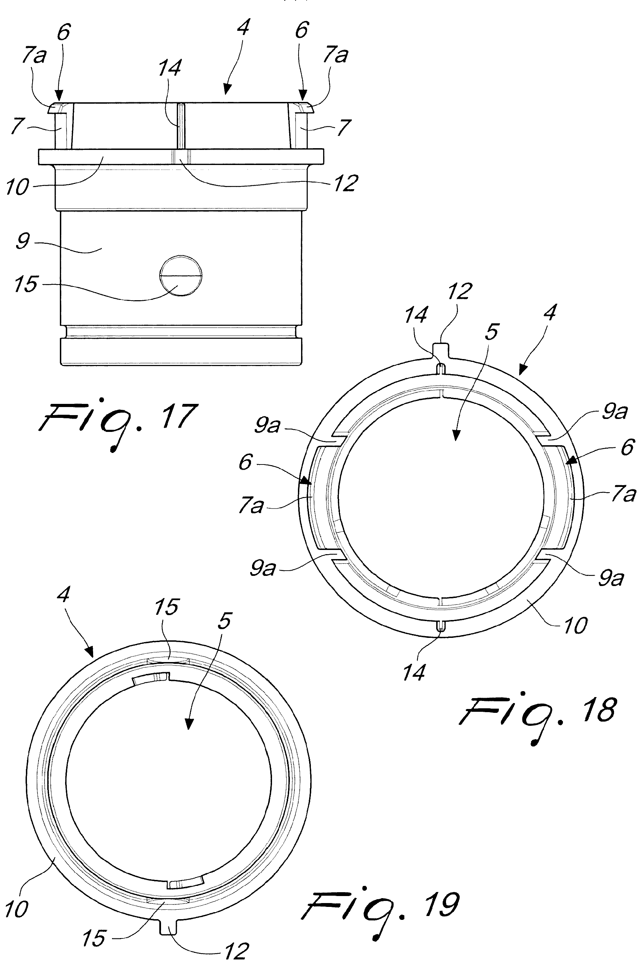

In particular, in an embodiment of significant practical interest, which in any case does not limit the application of the invention, the reference elements 12 are constituted by respective longitudinal crests, which extend from the outer lateral surfaces of the sleeve 2 and of the ring 4 (of the body 9). It is emphasized in any case that the reference elements 12 can take other forms, and for example they can be constituted by longitudinal notches. Advantageously, in the mating configuration the crest of the ring 4 (Figures 17-19) is accommodated in a groove 13 of corresponding shape (Figures 12-13), which is provided along the rim 2b of the sleeve 2 (the rim intended to be directed toward the fuel tank).

Thus, in addition to facilitating the assembly in the correct arrangement, the crest determines the prevention of the rotation of the ring 4 with respect to the sleeve 2 (once the mating configuration has been obtained), thus increasing the stability of the mutual binding point.

Conveniently, the assembly 1 comprises at least one longitudinal rib 14, which protrudes outward from an end portion of the ring 4 (the same portion in which the slots 9a are provided). In particular, the embodiment in the accompanying figures (as can clearly be seen for example from Figures 14 and 18) has two ribs 14, arranged on diametrically opposing sides with respect to the longitudinal axis A and equidistant from the slots 9a, but any number of ribs 14, and also any arrangement of them, should be understood as being included in the scope of protection claimed herein. The presence of one or more ribs 14 contains and/or cancels out any play between the ring 4 and the inner surface of the sleeve 2, so reducing or eliminating mutual vibrations and/or oscillations (especially when the nozzle is inserted and refueling begins), which could otherwise damage the components.

Positively, the ring 4 comprises at least one plug 15 which protrudes externally from the body 9. The plug 15 is contoured for coupling by interlocking with a correspondingly shaped socket which is provided along an additional tubular component (not shown in the figures), which can be coaxially fitted over the sleeve 2 (and is intended to remain inside the vehicle, directed toward the fuel tank).

Such tubular component can have various different functions, and for example it can support a fuel filter, which is located along the ideal extension of the passage 3 and of the channel 5, along the path that the fuel has to take in order to reach the fuel tank.

As with the ribs 14 discussed in the foregoing paragraphs, it should be noted that the pads 15 can also be any number and any arrangement: the accompanying figures (Figure 16 in particular) show a purely illustrative solution that has two pads 15 that are arranged on diametrically opposing sides with respect to the longitudinal axis A.

Operation of the inlet assembly according to the invention is the following.

As seen, the assembly 1 can be stably inserted with its sleeve 2 into an opening which is provided along a side of the vehicle, for placing the fuel tank in communication with the outside environment, typically in order to allow refueling.

The assembly 1 is evidently placed in the opening after having carried out the mutual assembly of the ring 4 with the sleeve 2, with the latter kept directed and open outward (exposing for example the detachable anchoring means 2a, which are designed to receive a fuel cap) and the ring 4 which is instead partially placed inside the passage 3 of the sleeve 2 (at least with the flaps 7), so as to protrude inward into the vehicle, and the fuel tank. The assembly 1 can thus operate as a filler neck of the conventional type, but with important and peculiar differences, which have already been introduced in the foregoing pages and are in any case emphasized below.

The mutual assembly of the sleeve 2 and of the ring 4, both of which can easily be provided by molding (although the possibility is not ruled out of obtaining them in another manner, while remaining within the scope of protection claimed herein), occurs according to practical methods, manually or automatically (partially or completely).

In fact, it is sufficient to axially align the ring 4 and the sleeve 2 (in so doing also aligning the reference elements 12) and then proceed with the introduction of the ring 4 into the passage 3 of the sleeve 2. When the ridges 6 touch the ledges 8, the further advancement of the ring 4 causes the elastic oscillation of the flaps 7, which pass from the non-deformed position to the deformed position, thus allowing the ring 4 to advance further. It should be noted that the choice to give the outer wall of each tooth 7a an inclined plane favors the bending inward of the rim 7, thus avoiding excessive stresses and possible breakage.

After having gone past the ledges 8, the flaps 7 return automatically to the non-deformed position, in so doing achieving the desired mating configuration: any subsequent attempt at extraction is blocked by the ledges 8. Furthermore, any further advancement of the ring 4 is also impossible, since, by virtue of suitable dimensioning, as soon as the ridges 6 go past the ledges 8, the collar 10 is brought to rest on the shoulder 11.

After having arranged the assembly 1 in the desired position, it effectively performs the functions for which it is designated: the user can insert the dispensing nozzle into the passage 3 and from there into the channel 5 (chosen to be of a size corresponding to that of the nozzle). By taking care to locate a filter downstream of the channel 5 (for example by making it so that it is the ring 4 itself that supports it), all the contaminant particles, which may be carried by the fuel, can be effectively intercepted before they reach the fuel tank.

Likewise, even if it is desired to carry out the refueling using other methods, for example by resorting to a fuel can or in any case by pouring the fuel from outside into the sleeve 2 (without using the nozzle), the assembly 1 still ensures a complete filtering of the fuel.

In fact, as previously explained, the sleeve 2 and the ring 4 are made separately, and therefore the assembly 1 that is formed by them does not have the geometric complications that afflict conventional solutions, which are necessary in order to ensure the variation of passage section. The absence of such geometric complications (and the presence of the collar 10 which abuts against the shoulder 11), in addition to enabling easy manufacture by molding, ensures that the assembly 1 is free from openings that are inside the passage 3 but outside the channel 5 and which are in any case connected to the interior of the tank: therefore, all the fuel introduced into the passage 3 is conveyed in the channel 5 and therefore is forced to pass through the filter.

The assembly 1 further incorporates useful additional contrivances, which contribute to increase practicality of use, structural strength and reliability.

Among these, it is again emphasized that the presence of the reference elements 12 facilitate identification of the correct mutual arrangement of the ring 4 and of the sleeve 2 in the step of putting together the assembly 1.

Furthermore, in the mating configuration one of such reference elements 12 (the one on the ring 4) is accommodated in a groove 13, blocking any unwanted rotation of the ring 4 with respect to the sleeve 2.

The stability of the mating and the structural strength are further increased by the ribs 14, which prevent small relative oscillations between the ring 4 and the sleeve 2.

Finally, the plugs 15 constitute a useful attachment point for coupling the ring 4 with other tubular components (which in turn are comprised in the assembly 1 or sourced separately).

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

## Claims

1. An inlet assembly for fuel tanks of vehicles, which comprises a substantially tubular sleeve (2) which can be stably arranged along a communication route between the fuel tank of a vehicle and the outside environment, **characterized in that** it comprises a ring (4), arranged in a mating configuration substantially coaxial with the inner surface of said sleeve (2) by the action of respective retention elements, said elements comprising at least one ridge (6) which protrudes from at least one respective end rim (7) of said ring (4) and is kept substantially resting on a respective ledge (8), which protrudes from said inner surface of said sleeve (2) and is arranged so as to interfere with the longitudinal translation of said ridge (6) and of said ring (4), within said sleeve (2), said at least one rim (7) being capable of elastically oscillating from a non-deformed position, in which it is maintained when said ring (4) is in said mating configuration, to at least one deformed position, in which said ridge (6) is bent inward in order for said ledge (8) to allow the longitudinal translation of said ridge (6) and of said ring (4), with respect to said sleeve (2), in order to allow the preliminary introduction of said ring (4) into said sleeve (2) and the obtaining of said mating configuration.

2. The inlet assembly according to claim 1, **characterized in that** said retention elements comprise at least two said ridges (6), which protrude from respective said end rims (7) of said ring (4).

3. The inlet assembly according to claim 1 or 2, **characterized in that** said ring (4) comprises a substantially cylindrical main body (9), said at least one end rim (7) being delimited by two longitudinal slots (9a) which are provided along an edge of said body (9).

4. The inlet assembly according to one or more of the preceding claims, **characterized in that** said at least one ridge (6) is constituted by a tooth (7a) which is formed by the tip of the respective said rim (7), the outer wall of said tooth (7a) being inclined and progressively tapering toward the edge of said body (9), in order to facilitate the elastic deformation of the respective said rim (7) during the preliminary introduction of said ring (4) into said sleeve (2) and the obtaining of said mating configuration.

5. The inlet assembly according to one or more of the preceding claims, **characterized in that** said ring (4) has an externally protruding collar (10), in said mating configuration said collar (10) resting against a shoulder (11) defined by said sleeve (2).

6. The inlet assembly according to one or more of the preceding claims, **characterized in that** said sleeve (2) and said ring (4) have respective external optical reference elements (12), which are arranged aligned in said mating configuration, for the facilitated identification of the correct arrangement of said ring (4) with respect to said sleeve (2) in the step of obtaining said mating configuration.

7. The inlet assembly according to claim 6, **characterized in that** said reference elements (12) are constituted by respective longitudinal crests, which extend from the outer lateral surfaces of said sleeve (2) and of said ring (4).

8. The inlet assembly according to claim 7, **characterized in that** in said mating configuration said crest of said ring (4) is accommodated in a groove (13) of corresponding shape, which is provided along a rim (2b) of said sleeve (2), for blocking the rotation of said ring (4) with respect to said sleeve (2).

9. The inlet assembly according to one or more of the preceding claims, **characterized in that** it comprises at least one longitudinal rib (14), which protrudes externally from an end portion of said ring (4), for containing and/or canceling out any play between said ring (4) and said inner surface of said sleeve (2).

10. The inlet assembly according to one or more of the preceding claims, **characterized in that** said ring (4) comprises at least one plug (15) which protrudes externally from said body (9), said plug (15) being contoured for coupling by interlocking with a correspondingly shaped socket which is provided along an additional tubular component, which can be coaxially fitted over said sleeve (2).
